# EUROPEAN PATENT SPECIFICATION

(11) **EP 1 654 519 B1**
(45) Date of publication and mention of the grant of the patent: **27.04.2011**
(21) Application number: 04743634.0
(22) Date of filing: 02.08.2004
(51) Int. Cl.: G01C 21/32

(54) **MAP UPDATING IN A NAVIGATION SYSTEM**
KARTENAKTUALISIERUNG IN EINEM NAVIGATIONSSYSTEM
ACTUALISATION DE CARTES DANS UN SYSTEME DE NAVIGATION

(30) Priority: 02.08.2003 GB 0318194
(43) Date of publication of application: 10.05.2006
(73) Proprietor: Nissan Motor Manufacturing (UK) Ltd., Cranfield Bedfordshire MK43 0DB (GB)
(72) Inventor: WILLIAMS, John, Nissan Technical Centre Europe Ltd, Bedfordshire MK43 0DB (GB)
(74) Representative: Holmes, Matthew William
(86) International application number: PCT/GB2004/003315
(87) International publication number: WO 2005/015129

(56) References cited:
- EP-A- 0 921 509
- DE-A- 10 030 932
- DE-C- 19 525 291
- US-A- 6 154 152
- PATENT ABSTRACTS OF JAPAN vol. 017, no. 239 (P-1534), 13 May 1993 (1993-05-13) -& JP 04 362683 A (OKI ELECTRIC IND CO LTD), 15 December 1992 (1992-12-15)

## Description

The present invention relates to a navigation system and particularly, but not exclusively, to an improved satellite navigation system for a vehicle such as an automobile.

Navigation systems, including satellite navigation systems, for automobiles and other vehicles are well known. In most systems, a Global Positioning System (GPS) receiver determines the position and/or motion of the vehicle using a method of triangulation based on signals transmitted by a network of earth-orbiting satellites. A control unit or processor compares the vehicle position as determined by the GPS receiver with map data which is stored on, and read from, a data storage media such as a CD-ROM or DVD and displays the position of the vehicle in relation to the map data using a video screen or display.

In such systems, the GPS receiver is able to determine the position of the vehicle, in terms of geographical latitude and longitude, almost anywhere. However, the map data stored on the storage media is limited both in quantity and detail and is in a read-only format and therefore cannot be updated or amended. In most vehicles, updated map data is acquired only through the purchase and installation of a replacement CD-ROM or DVD which can be inconvenient, such replacement media being available only when the manufacturer develops it, and also expensive.

In many cases, the map data being used by the satellite navigation system is not completely up to date or accurate. For example, roads that form part of new housing or industrial developments may not appear in the map data. Frequently, some minor roads are not included and the system is usually not capable of taking into account changes in road names or numbers.

It would be advantageous to provide a satellite navigation system which reduces or eliminates the above disadvantages. From US 6154152 map updating in a navigation system is known.

According to one aspect of the present invention, therefore, there is provided a navigation system according to claim 1.

If the position of the vehicle does not correspond to a road or route identified in said map data, the control means may be arranged to generate new map data relating to the road or route.

The new map data may be stored in second storage means connected to the control means.

The second storage means may comprise a writeable storage media. The writeable storage media may be an electronic storage media, such as an EEPROM, a magnetic storage media, such as a hard drive, or a digital or optical storage media such as a CD-R, CD-RW, DVD-R or DVD-RW.

The first storage means may comprise a read-only storage media. The first storage means may comprise a DVD or CD-ROM.

Alternatively, the first storage means may comprise a writeable storage media, such as those described above. In this case, the new map data may be stored in the first storage means.

The control means may be arranged to compare and/or calculate the position of the vehicle with the map data and the new map data and the display means may be arranged to display the position of the vehicle in relation to the map data and the new map data.

The system may additionally comprise input means for manually inputting information data relating to the map data and/or the new map data.

The information data may be stored in the first storage means or in the second storage means.

The information data may include one or more of the following:
road name, road number, road type, speed limit, inclination, one way status, local attractions, service stations, amenities, road works, toll charges,
   or other data.

According to another aspect of the present invention there is provided a method according to claim 11.

The present invention will now be described, by way of example only, with reference to the accompanying drawings in which:
Figure 1 is a schematic block diagram of a known form of satellite navigation system for a vehicle; and
Figure 2 is a schematic block diagram of a navigation system embodying one form of the invention.

In the drawings, and in the following description, like reference numerals indicate like parts.

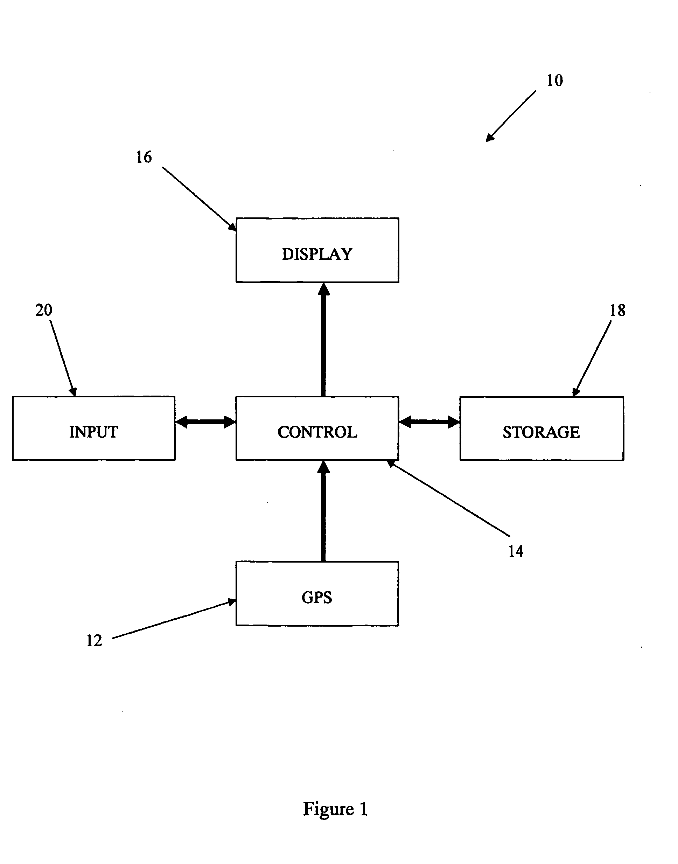

Referring firstly to Figure 1 this illustrates, in block form, a known form of satellite navigation system for a vehicle. The system, shown generally at 10, includes a Global Positioning System (GPS) receiver 12 which is arranged to receive a signal transmitted from each of a plurality of earth-orbiting satellites. In practice, four signals are used to determine the geographical position of the vehicle on the earth's surface - three signals are necessary to triangulate the vehicle's position and the fourth signal is used as a timing reference signal to minimise error. The method of operation of the GPS receiver 12 will be well understood by the skilled person and further detail is not provided herein.

The GPS receiver 12 is connected to an input of a system processor or control unit 14. The control unit 14 is arranged to control, and in some cases generate, information which is displayed by the system on a monitor or display 16. The display 16 may be located in or on the front console, dashboard or cockpit module of the vehicle (not shown).

In addition, a storage media in the form of a DVD 18, is connected to an input of the control unit 14 and has map data or similar stored thereon. The DVD 18 is, in use, held in a device for reading the map data from the DVD, such as a DVD reader or drive (not shown), and applying the map data to the control unit 14.

The system 10 also comprises an input device 20, such as a keypad or other Human Machine Interface (HMI) unit, for controlling the system 10 and for inputting commands to the control unit 14.

In use, as the vehicle moves, the GPS receiver 12 substantially continuously receives the signals from the earth-orbiting satellites and determines the geographical position of the vehicle on the earth's surface in terms of the vehicle's latitude and longitude. The receiver 12 generates a position signal, representative of the vehicle's position, and applies the position signal to the control unit 14.

At substantially the same time, the control unit 14 instructs the DVD reader (not shown) to read map data corresponding to the vehicle's position from the DVD 18 and to apply the map data to the control unit 14.

The control unit 14 compares the position of the vehicle, as indicated by the position signal, with the map data to calculate the position of the vehicle in relation thereto. The control unit then controls the display 16 to display the map data with the position of the vehicle superimposed thereon. The display 16 thus provides the vehicle user with a map of the surrounding area and the instantaneous position of the vehicle on the map.

This process continues substantially continuously so that the display provides an indication of the vehicle's position and movement in real time.

The input device 20 is used to send instructions to the control unit 14 in order to, for example, change the scale of the map data, change the view of the map data on the display or program a route into the system.

The accuracy of the map and vehicle position shown on the display 16 will depend to a great extent on the quality of the map data stored on the DVD 18 and it will be appreciated that this will vary between different manufacturers. Some manufacturers provide exceptionally detailed map data on the DVD while others provide less detailed information. For example, in some instances, the map data does not include street names within towns or cities; in other cases, minor roads are not featured.

In all cases, however, the system does not permit the vehicle user to change or update the map data on the DVD. Nor is the system able to automatically update the map data. Consequently, once the DVD has been released by the manufacturer, it cannot be updated to take into account, for example, road name or number changes, new trunk roads, such as bypass roads or the roads which are laid on new industrial or housing developments.

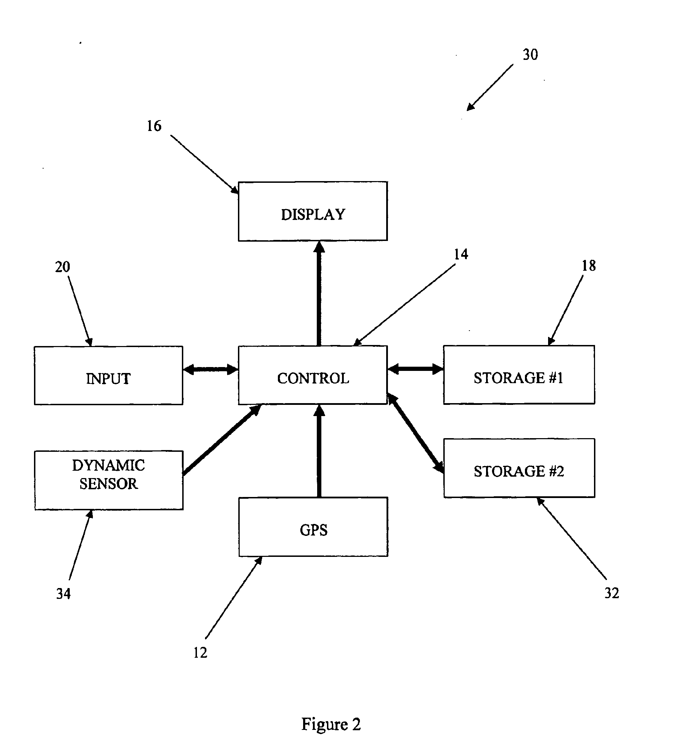

Referring now to Figure 2, a navigation system according to one aspect of the present invention is shown generally at 30. The invention aims to address the drawbacks of the previously described system.

The system 30 comprises some or all of the elements of the prior art system 10. Specifically, the system 30 includes receiver means in the form of a GPS receiver 12, control means in the form of a control unit, microprocessor or the like 14, display means in the form of a display 16, first storage means in the form of a map data store 18 and input means in the form of an input device or HMI 20.

In addition, however, the system 30 comprises second storage means in the form of a recordable, updateable, writeable or rewriteable data store 32 which is connected to the control unit 14. In the illustrated embodiment, the second storage means comprises a writeable electronic memory device such as an EEPROM 32. Any suitable form of storage media in which data can be written thereto may be employed as the second storage means, however.

In general, the system 30 operates in substantially the same manner as the system of Figure 1. Specifically, the position of the vehicle in relation to the earth's surface is determined by the GPS receiver 12 which generates a position signal and applies this to the control unit 14. The control unit reads the map data from the DVD 18 via the DVD reader (not shown) and determines the position of the vehicle in relation to the map data. The control unit 14 then controls the display 16 to display the relevant map data with the position of the vehicle superimposed thereon.

In most instances, the control unit 14 will, on comparing the position of the vehicle (as determined by the GPS receiver 12) with the map data read from the DVD 18, determine that the position of the vehicle corresponds to a road or route which is defined or represented within the map data. In this case, the control unit 14 will control the display to show the position of the vehicle on that road or route.

However, in some cases, the vehicle may be travelling along a road which is not defined or represented by the map data. This may occur, for example, if the road is new, such as a new bypass or a road which forms part of a new industrial or housing estate.

In this case, the GPS receiver 12 continues to send the POSITION signal, representative of the vehicle's position on the earth's surface, to the control unit 14. The control unit 14 reads the map data from the DVD 18 via the DVD reader and, comparing the vehicle's position with the map data from the DVD, determines that the position of the vehicle does not correspond to a road which is defined within the map data on the DVD.

Using the position signal generated by the GPS receiver 12 which is representative of the position of the vehicle, the control unit 14 then generates map data corresponding to the road or route along which the vehicle is travelling and applies this data to the storage media 32. The map data corresponding to the road, hereafter termed the "new map data", is written to and stored in the second storage media 32.

The GPS receiver 12 is able to determine not only the position of the vehicle, but also its heading, i.e. the direction in which the vehicle is pointed. This information is sufficient for the control unit 14 to make a reasonably accurate determination of the shape or topography of the road and to generate new map data corresponding thereto.

When the new map data is being, or has been, generated, the control unit 14 requests information about the road from the vehicle user by controlling the display 16 to display thereon one or more questions. The vehicle user is able to input information about the road, hereafter termed "information data", using the input device or HMI 20. For example, the display 14 may display questions asking for information such as:
Road number, e.g. A431, B4011 etc.;
Road name, e.g. Cranfield Road, Honeywell Crescent etc.;
Road type, e.g. single-lane single carriageway, single lane dual carriageway, motorway, etc.;
Speed limit, e.g. 30mph, 40mph, national speed limit etc.;
Whether the road is a one-way street;
   and other similar information. The user inputs the appropriate information data, responding to the questions by means of the input device 20.

The new map data relating to the road or route, including, where present, the additional information data about the road that has been input by the user, is written to the second storage media 32 and stored in a format which can be read by the reader and interpreted by the control unit 14. In one embodiment, the new map data and additional information data is stored in a manner similar or identical to that by which the original map data is stored on the DVD 18.

In one embodiment, it is not necessary for the vehicle user to input the information data immediately since this may be difficult whilst driving. Instead, the system is arranged such that the driver can, at any time after the new map data has been stored, access that data and provide additional details of the road or route.

Thereafter, when the control unit 14 receives the position signal from the GPS receiver 12, it reads both the map data from the DVD 18, via the DVD reader, and the new map data from the second storage media 32. The control unit 14 compares the position of the vehicle with the map data and the new map data to calculate the position of the vehicle in relation thereto.

The control unit 14 then controls the display 16 to display a map of the relevant area, including roads defined only in the map data on the DVD 18 and roads defined only in the new map data, with the position of the vehicle superimposed thereon. In other words, the control unit 14 combines the map data from the DVD 18 and the new map data from the second storage media 32 substantially as if it were reading map data from a single source. The map data from the DVD18 is supplemented with the new map data from the second storage media 32.

If the position of the vehicle as determined by the GPS receiver 12 corresponds to a road which is defined by the map data from the DVD 18 or from the new map data from the second storage media 32, then the control unit 14 controls the display 16 to display a map of the relevant area, using the map data from the DVD 18 and, where applicable, the new map data from the second storage media 32, with the position of the vehicle superimposed thereon.

If the position of the vehicle does not correspond to a road which is defined by the map data on the DVD 18 or by the new map data stored in the second storage media 32, the control unit 14 generates new map data about the road using the position signal from the GPS receiver 12 and the vehicle heading, in the manner described above.

It will be seen that the present invention provides an improved navigation system which is, or can be, updated to include new roads or changes to existing roads. By determining that the position of the vehicle does not correspond to a road which is defined or represented within the map data on the DVD, the system automatically generates new map data corresponding to the road along which the vehicle is travelling and stores the new map data for access later on. Effectively, therefore, the system "learns" the roads along which the vehicle travels, updating the map data where the road is not present in the map data on the DVD 18.

It will be appreciated that the system of the invention can take a number of forms and that a number of modifications or improvements can be made thereto. For example, the second storage media 32 can take substantially any form of device which enables data to be written thereto and read therefrom. Examples include EEPROM, Flash ROM, RAM, CD-R, CD-RW, DVD-R, DVD-RW, magnetic storage devices such as hard disks or removable storage media such as memory sticks or cards etc.

Although the illustrated embodiment describes a second storage media 32 which is provided separately and in addition to the DVD 18, it will be understood that the system could provide only one storage media to replace both the second storage media 32 and the DVD 18. For example, the DVD 18 could be replaced with a DVD-R or DVD-RW where available, and the DVD reader (not shown) replaced by a DVD writer or re-writer.

In this case, the new map data would be generated by the control unit 14 and written to and stored on the DVD-R or DVD-RW alongside the original map data. Effectively, therefore, in this embodiment the original map data is updateable on the DVD.

An improvement to the system involves the addition of a dynamic motion sensor, or similar. Many vehicles equipped with stability control systems, anti-skid systems or the like include devices which can detect the motion of the vehicle and other parameters including changes in direction or steering angle, speed, pitch, yaw, roll and many more.

In one embodiment, the system of the invention employs such a device, shown at reference numeral 34 in Figure 2, to provide this dynamic data to the control unit 14 enabling the latter to generate more accurate new map data or to automatically enter the information listed above rather than asking the vehicle user.

For example, information about the heading of the vehicle, direction changes and steering angle input can be applied by the sensor 34 to the control unit 14 which enables the latter to generate significantly more accurate new map data about the topography or layout of the road.

In one embodiment, the dynamic sensor comprises the vehicle's existing speed sensor, used to determine the vehicle's speed. This may, for example, comprise a sensor in the ABS system or a gearbox sensor.

According to the invention, information concerning the speed of the vehicle is applied to the control unit 14 which can therefore estimate the type of road that the vehicle is driving along. For example, if the vehicle is travelling at 30mph, the control unit may estimate that the new road along which the vehicle is travelling is a road with a 30mph speed limit. This estimation may optionally be improved by comparing the position of the vehicle with the map data from the DVD. If the map data from the DVD shows that the vehicle is travelling in or near a built up area, then this may validate the estimation that the new road is a minor town road with a relatively low speed limit.

Alternatively, if the vehicle is travelling at 70mph, the control unit may estimate that the new road is a fast road such as a dual carriageway, motorway or highway. Again, reference to the map data from the DVD may confirm whether the position of the vehicle supports the estimation that the new road is a motorway or the like.

The information data generated by the system relating to the speed limit for the new road is then stored in the manner described.

This facility is highly advantageous where the navigation system has a route-planning function since this relies upon a knowledge of the speed limits of each road between the starting point and the destination in order to calculate the fastest route therebetween.

Since this estimation is based on the assumption that the driver of the vehicle is obeying the speed limit on the new road, it may be advantageous for the vehicle user still to be able to input information data to the system, to confirm the information data estimated by the system or to change existing information data or map data.

The system may provide means for enabling the user to input additional information about roads which are defined within the original map data. Such information may include the presence of roadworks at a particular location, the imposing of toll charges along a particular stretch of road, the change of an existing road's name or number or any other form of information. Such information is stored in the storage media and read back when necessary by the control unit 14 as described above.

In one embodiment, the new information data can be removed or deleted from the storage media, for example if it becomes outdated. The new map data or information can be written after the user has confirmed agreement or it may be written automatically.

When the system detects that the vehicle has deviated from the map stored in the system, new map data is written to a storage device and can be used to calculate future routes. For example, when route guidance to a destination is desired, the system uses both the original map data and the new map data to calculate the route. Thus, it is advantageous to provide the additional information data with the new map data to allow the system to calculate optimum routes, the system using the information data to determine likely average speed along each road and thus total time along the route. The system calculates each route in a similar manner to that used by conventional navigation systems, with the exception that the system of the invention uses both the original map data and the new map data and information data to calculate the preferred route.

In one embodiment, the user is able to select the degree of deviation which is permissible before new map data is generated. This arrangement can reduce the likelihood of the system generating new map data when the vehicle pulls into lay-bys or service stations.

Data such as the location of service stations, shops, tourist attractions or sports amenities can be written to the storage media by the user. The location of favourite hotels or restaurants can be entered and stored.

The present invention provides a navigation system which allows map data to be changed, amended or updated with new map data, generated by a control unit, relating to roads, routes or other drivable areas which are not defined within the original map data or by additional information input by the user. The new map data or information data is stored on a storage media which may comprise a separate additional storage device or a writeable part of the storage device on which the original map data is stored.

## Claims

1. A navigation system for a vehicle comprising receiver means (12) for determining the position of the vehicle, means for reading map data from a first data store (18), a control unit (14) for comparing the position of the vehicle with the map data in the first data store (18) and display means (16) for displaying the position of the vehicle in relation to the map data, **characterised in that** if the position of the vehicle does not correspond to a road or route contained in the map data, the control unit (14) is operable to generate new map data relating to the new road or route and to estimate the type of road in dependence on the speed of the vehicle therealong and to store the new mapdata and the estimation road type.

2. A system as claimed in claim 1 wherein the control unit is arranged to estimate the speed limit of the road or route in dependence on the speed of the vehicle therealong and to store same.

3. A system as claimed in claim 1 or claim 2 wherein the new map data is stored in a second data store connected to the control unit.

4. A system as claimed in claim 3 wherein the second data store comprises an electrical, electronic or magnetic writeable storage media.

5. A system as claimed in claim 2 wherein the control unit is arranged to change or update the map data in the first data store with the new map data.

6. A system as claimed in any preceding claim wherein the control unit is arranged to compare the position of the vehicle with the map data and the new map data and the display means is arranged to display the position of the vehicle in relation to the map data and the new map data.

7. A system as claimed in claim 6 comprising input means for manually inputting information data relating to the map data and/or the new map data.

8. A system as claimed in claim 7 wherein the information data is stored in the first data store or in the second data store.

9. A system as claimed in claim 8 wherein the information data comprises data including one or more of the following:
road name, road number, road type, speed limit, inclination, one way status, local attractions, service stations, amenities, road works, toll charges.

10. A system as claimed in any of claims 2 to 9 comprising means for calculating a route from a first location to a second location using the map data and/or the new map data.

11. A method of operating an information system for a vehicle comprising:
determining the position of the vehicle;
comparing the position of the vehicle with map data; and
if the position of the vehicle does not correspond to a road or route identified in the map data, then:
generating new map data relating to the road or route;
estimating type of road in dependence on the speed of the vehicle therealong; and
storing the new map data and the estimated road type.

12. A method as claimed in claim 11 wherein the step of storing the new map data and the estimated road type includes associating the estimated road type with the new map data.

## Patentansprüche

1. Navigationssystem für ein Fahrzeug, umfassend Empfängermittel (12) zum Bestimmen der Position des Fahrzeugs, Mittel zum Lesen von Kartendaten aus einem ersten Datenspeicher (18), eine Steuereinheit (14) zum Vergleichen der Position des Fahrzeugs mit den Kartendaten im ersten Datenspeicher (18) und Anzeigemittel (16) zum Anzeigen der Position des Fahrzeugs in Beziehung zu den Kartendaten, **dadurch gekennzeichnet, dass** wenn die Position des Fahrzeugs nicht einer in den Kartendaten enthaltenen Straße oder Strecke entspricht, die Steuereinheit (14) funktionsfähig ist, neue, sich auf die neue Straße oder Strecke beziehende Kartendaten zu generieren und den Typ der Straße in Abhängigkeit von der Geschwindigkeit des Fahrzeugs entlang derselben abzuschätzen und die neuen Kartendaten und den geschätzten Straßentyp zu speichern.

2. System nach Anspruch 1, wobei die Steuereinheit dazu angeordnet ist, die erlaubte Höchstgeschwindigkeit der Straße oder Strecke in Abhängigkeit von der Geschwindigkeit des Fahrzeugs entlang derselben abzuschätzen und sie zu speichern.

3. System nach Anspruch 1 oder Anspruch 2, wobei die neuen Kartendaten in einem mit der Steuereinheit verbundenen zweiten Datenspeicher gespeichert werden.

4. System nach Anspruch 3, wobei der zweite Datenspeicher ein elektrisches, elektronisches oder magnetisches beschreibbares Speichermedium umfasst.

5. System nach Anspruch 2, wobei die Steuereinheit dazu angeordnet ist, mit den neuen Kartendaten die Kartendaten im ersten Datenspeicher zu ändern oder zu aktualisieren.

6. System nach einem der vorangehenden Ansprüche, wobei die Steuereinheit dazu angeordnet ist, die Position des Fahrzeugs mit den Kartendaten und den neuen Kartendaten zu vergleichen und das Anzeigemittel dazu angeordnet ist, die Position des Fahrzeugs in Beziehung zu den Kartendaten und den neuen Kartendaten anzuzeigen.

7. System nach Anspruch 6, umfassend Eingabemittel zum manuellen Eingeben von sich auf die Kartendaten und/oder die neuen Kartendaten beziehenden Informationsdaten.

8. System nach Anspruch 7, wobei die Informationsdaten im ersten Datenspeicher oder im zweiten Datenspeicher gespeichert werden.

9. System nach Anspruch 8, wobei die Informationsdaten eines oder mehrere der Folgenden umfassen:
Straßenname, Straßennummer, Straßentyp, erlaubte Höchstgeschwindigkeit, Neigung, Einbahnstatus, örtliche Sehenswürdigkeiten, Tankstellen, Einrichtungen, Straßenbaustellen, Mautgebühren.

10. System nach einem der Ansprüche 2 bis 9, umfassend Mittel zum Berechnen einer Strecke von einem ersten Ort zu einem zweiten Ort unter Verwendung der Kartendaten und/oder der neuen Kartendaten.

11. Verfahren zum Betreiben eines Informationssystems für ein Fahrzeug, das Folgendes umfasst:
Bestimmen der Position des Fahrzeugs;
Vergleichen der Position des Fahrzeugs mit Kartendaten; und
wenn die Position des Fahrzeugs nicht einer in den Kartendaten identifizierten Straße oder Strecke entspricht:
Erzeugen neuer Kartendaten, die sich auf die Straße oder Strecke beziehen;
Abschätzen des Typs der Straße in Abhängigkeit von der Geschwindigkeit des Fahrzeugs entlang derselben; und
Speichern der neuen Kartendaten und des geschätzten Straßentyps.

12. Verfahren nach Anspruch 11, wobei der Schritt des Speicherns der neuen Kartendaten und des geschätzten Straßentyps das Assoziieren des geschätzten Straßentyps mit den neuen Kartendaten umfasst.

## Revendications

1. Système de navigation pour véhicule comprenant un moyen récepteur (12) pour déterminer la position du véhicule, un moyen de lecture de données de carte provenant d'une première mémoire de données (18), une unité de commande (14) pour comparer la position du véhicule aux données de carte dans la première mémoire de données (18) et un moyen d'affichage (16) pour afficher la position du véhicule relativement aux données de carte, **caractérisé en ce que** si la position du véhicule ne correspond pas à une route ou un itinéraire contenu(e) dans les données de carte, l'unité de commande (14) est exploitable pour générer de nouvelles données de carte relatives à la nouvelle route ou au nouvel itinéraire et estimer le type de route en fonction de la vitesse du véhicule sur celle-ci et mémoriser les nouvelles données de carte et le type de route estimé.

2. Système selon la revendication 1, dans lequel l'unité de commande est agencée pour estimer la limite de vitesse de la route ou de l'itinéraire en fonction de la vitesse du véhicule sur celle-ci ou celui-ci et la mémoriser.

3. Système selon la revendication 1 ou la revendication 2, dans lequel les nouvelles données de carte sont mémorisées dans une seconde mémoire de données connectée à l'unité de commande.

4. Système selon la revendication 3, dans lequel la seconde mémoire de données comprend un support de mémorisation inscriptible électrique, électronique ou magnétique.

5. Système selon la revendication 2, dans lequel l'unité de commande est agencée pour changer ou actualiser les données de carte dans la première mémoire de données avec les nouvelles données de carte.

6. Système selon l'une quelconque des revendications précédentes, dans lequel l'unité de commande est agencée pour comparer la position du véhicule aux données de carte et aux nouvelles données de carte et le moyen d'affichage est agencé pour afficher la position du véhicule relativement aux données de carte et aux nouvelles données de carte.

7. Système selon la revendication 6, comprenant un moyen de saisie pour saisir manuellement des données d'information concernant les données de carte et/ou les nouvelles données de carte.

8. Système selon la revendication 7, dans lequel les données d'information sont mémorisées dans la première mémoire de données ou dans la seconde mémoire de données.

9. Système selon la revendication 8, dans lequel les données d'information comprennent des données comportant l'une ou plusieurs des données suivantes :
nom de la route, numéro de la route, type de route, limite de vitesse, inclinaison, statut de sens unique, attractions locales, stations essence, aménagements, travaux routiers, péages.

10. Système selon l'une quelconque des revendications 2 à 9, comprenant un moyen pour calculer un itinéraire depuis une première adresse jusqu'à une seconde adresse en utilisant les données de carte et/ou les nouvelles données de carte.

11. Procédé d'exploitation d'un système d'information pour véhicule comprenant :
la détermination de la position du véhicule ;
la comparaison de la position du véhicule à des données de carte ; et
si la position du véhicule ne correspond pas à une route ou un itinéraire identifié(e) dans les données de carte :
la génération de nouvelles données de carte relatives à la nouvelle route ou au nouvel itinéraire ;
l'estimation du type de route en fonction de la vitesse du véhicule sur celle-ci ; et
la mémorisation des nouvelles données de carte et du type de route estimé.

12. Système selon la revendication 11, dans lequel l'étape de mémorisation des nouvelles données de carte et du type de route estimé comporte l'association du type de route estimé aux nouvelles données de carte.
